(19) **Europäisches Patentamt**
**European Patent Office**
**Office européen des brevets**

(11) **EP 4 773 596 A1**

(12) **EUROPEAN PATENT APPLICATION**

(43) Date of publication:
**08.07.2026 Bulletin 2026/28**

(21) Application number: **25227365.1**

(22) Date of filing: **29.12.2025**

(51) International Patent Classification (IPC):
*H04N 19/105* (2014.01)  *H04N 19/46* (2014.01)
*H04N 19/597* (2014.01)  *H04N 19/70* (2014.01)

(52) Cooperative Patent Classification (CPC):
**H04N 19/597; H04N 19/105; H04N 19/46;
H04N 19/70;** H04N 19/30

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **02.01.2025 US 202563741364 P**

(71) Applicant: **Nokia Technologies Oy
02610 Espoo (FI)**

(72) Inventors:
• **BIATEK, Thibaud
Troyes (FR)**
• **ILOLA, Lauri Aleksi
Tampere (FI)**
• **ZAKHARCHENKO, Vladyslav
San Francisco (US)**

(74) Representative: **Nokia EPO representatives
Nokia Technologies Oy
Karakaari 7
02610 Espoo (FI)**

(54) **METHOD AND APPARATUS FOR VIDEO ENCODING AND DECODING**

(57)     The embodiments concern a method for encoding, comprising determining external data to generate one or more pictures, the generated one or more pictures to be used as reference pictures; generating loading instructions for the external data, the loading instructions indicating how the external data is to be processed; generating one or more predictors from corresponding one or more reference pictures; encoding coding units with the one or more predictors to generate encoded video data; and signaling the loading instructions to a decoder in or along a bitstream comprising the encoded video data. The embodiments also concern an encoder.

**EP 4 773 596 A1**

**Description**

<u>TECHNICAL FIELD</u>

The present solution relates generally to video encoding and video decoding.

<u>BACKGROUND</u>

This section is intended to provide a background or context to the invention that is recited in the claims. The description herein may include concepts that could be pursued but are not necessarily ones that have been previously conceived or pursued. Therefore, unless otherwise indicated herein, what is described in this section is not prior art to the description and claims in this application and is not admitted to be prior art by inclusion in this section.

A video codec comprises an encoder and a decoder. The encoder transforms an input video into a compressed representation suited for storage and/or transmission. The decoder decompresses the compressed video representation back into a viewable form. During encoding, the encoder may discard some information in the original video sequence to be able to represent the video in a more compact form (that is, at lower bitrate).

<u>SUMMARY</u>

The scope of protection sought for various embodiments of the invention is set out by the independent claims. The embodiments and features, if any, described in this specification that do not fall under the scope of the independent claims are to be interpreted as examples useful for understanding various embodiments of the invention.

Various aspects include a method, an apparatus and a computer readable medium comprising a computer program stored therein, which are characterized by what is stated in the independent claims. Various embodiments are disclosed in the dependent claims.

According to a first aspect, there is provided an apparatus comprising at least one processor and at least one memory, said at least one memory stored with code thereon, which when executed by said at least one processor, causes the apparatus to: determine external data to generate one or more pictures, the generated one or more pictures to be used as reference pictures; generate loading instructions for the external data, the loading instructions indicating how the external data is to be processed; generate one or more predictors from corresponding one or more reference pictures; encode coding units with the one or more predictors to generate encoded video data; and signal the loading instructions to a decoder in or along a bitstream comprising the encoded video data.

According to a second aspect, there is provided a method comprising determining external data to generate one or more pictures, the generated one or more pictures to be used as reference pictures; generating loading instructions for the external data, the loading instructions indicating how the external data is to be processed; generating one or more predictors from corresponding one or more reference pictures; encoding coding units with the one or more predictors to generate encoded video data; and signaling the loading instructions to a decoder in or along a bitstream comprising the encoded video data.

According to a third aspect, there is provided an apparatus comprising at least means for determining external data to generate one or more pictures, the generated one or more pictures to be used as reference pictures; means for generating loading instructions for the external data, the loading instructions indicating how the external data is to be processed; means for generating one or more predictors from corresponding one or more reference pictures; means for encoding coding units with the one or more predictors to generate encoded video data; and means for signaling the loading instructions to a decoder in or along a bitstream comprising the encoded video data.

According to a fourth aspect, there is provided computer program product comprising computer program code configured to, when executed on at least one processor, cause an apparatus or a system to determine external data to generate one or more pictures, the generated one or more pictures to be used as reference pictures; generate loading instructions for the external data, the loading instructions indicating how the external data is to be processed; generate one or more predictors from corresponding one or more reference pictures; encode coding units with the one or more predictors to generate encoded video data; and signal the loading instructions to a decoder in or along a bitstream comprising the encoded video data.

According to an embodiment for any of the previous aspects, the external data is sent to a decoder.

According to an embodiment for any of the previous aspects and/or embodiment, the loading instructions comprises a unique identifier of the external file to be loaded, including: a file name, a hash value, a checksum.

According to an embodiment for any of the previous aspects and/or embodiments, the loading instructions comprises one or more of the following: a picture order count, a reference picture list, layer identifier information, a format conversion instruction, an upscaling filter, downscaling filter, a data transformation, one or more frame offsets, one or more image offsets, one or more validity flags, a rotation, a color conversion.

According to an embodiment for any of the previous aspects and/or embodiments, the external data comprises frames that are based on texture files and are coded in one color coding format and converted to encoded video color coding format, wherein the loading instructions comprises conversion instructions.

According to an embodiment for any of the previous aspects and/or embodiments, the external data comprises frames that are based on texture files and are represented in a specific coordinate system and converted to the coordinate system used in encoding, wherein the loading instructions comprise coordinate shift instructions.

According to an embodiment for any of the previous aspects and/or embodiments, the external data comprises frames that are based on texture files and are packed together in a reference frame, wherein the loading instructions comprise packing instructions.

According to an embodiment for any of the previous aspects and/or embodiments, the external data comprises frames that are based on texture files and have different resolution than an encoded resolution, whereupon the loading instructions comprise scaling filters.

According to an embodiment for any of the previous aspects and/or embodiments, the external data comprises frames that are based on rendering of a local texture files, wherein the loading instructions comprise rendering operations.

According to an embodiment for any of the previous aspects and/or embodiments, the loading instructions are received with in-band or out-of-band signaling.

According to an embodiment for any of the previous aspects and/or embodiments, one or more predictors are generated based on a patched texture in a picture generated from the external data.

According to an embodiment for any of the previous aspects and/or embodiments, an inter-layer predictor is generated from a reference picture in a lower layer to encode coding units in a current picture.

According to an embodiment for any of the previous aspects and/or embodiments, the computer program product is embodied on a non-transitory computer readable medium.

## BRIEF DESCRIPTION OF THE DRAWINGS

For a more complete understanding of example embodiments of the present invention, reference is now made to the following descriptions taken in connection with the accompanying drawings in which:

FIGURE 1 shows a simplified example of an encoding process;
FIGURE 2 shows a simplified example of a decoding process;
FIGURE 3 shows an example of VVC in-loop filters;
FIGURE 4 shows an example of split rendering in 3GPP network;
FIGURE 5 shows an example of a current architecture of split rendering;
FIGURE 6 shows an example of the architecture according to an embodiment;
FIGURE 7 shows an example of loading of external data to a reference picture buffer;
FIGURE 8 shows an example of loading locally rendered picture into a reference picture buffer;
FIGURE 9 is a flow diagram showing a method for encoding according to an embodiment;
FIGURE 10 is a flow diagram showing a method for decoding according to an embodiment;
FIGURE 11 shows an apparatus according to an embodiment; and
FIGURE 12 shows a schematic diagram of an example multimedia communication system within which various embodiments may be implemented.

## DETAILED DESCRIPTON OF THE DRAWINGS

The following description and drawings are illustrative and are not to be construed as unnecessarily limiting. The specific details are provided for a thorough understanding of the disclosure. However, in certain instances, well-known or conventional details are not described in order to avoid obscuring the description. Reference in this specification to "one embodiment" or "an embodiment" means that a particular feature, structure, or characteristic described in connection with the embodiment is included in at least one embodiment of the disclosure.

The present embodiments apply to video coding technologies in general. They can be used for wide range of applications, from broadcast to streaming, video conferencing and cloud gaming. They are particularly relevant in addressing the case of split rendering where both a client and a server are executing rendering tasks. The video rendered on the server is encoded and sent to the client for final composition and display. A suitable application for this can be for example cloud gaming, where a video game is rendered remotely in a server, and a client is sending control instructions to the server. As response to the control instructions, the client receives, decodes and displays remotely rendered frames.

Before describing the embodiments further, a brief reference to evolution of video coding standardization is given. The present embodiments are suited within the context of next generation video coding standardization, e.g., H.267 video coding standard and the ECM (Enhanced Compression Model) exploration, but are not limited to any particular standard. Therefore, the present embodiments are suited for other next generation video coding standards, as well those before, such as e.g., H.264, H.265 and H.266.

**Video Coding**

A video codec consists of an encoder and a decoder. The encoder transforms an input video into a compressed representation suited for storage and/or transmission. The decoder can decompress the compressed video representation back into a viewable form. The encoder may discard some information in the original video sequence to be able to represent the video in a more compact form (that is, at lower bitrate).

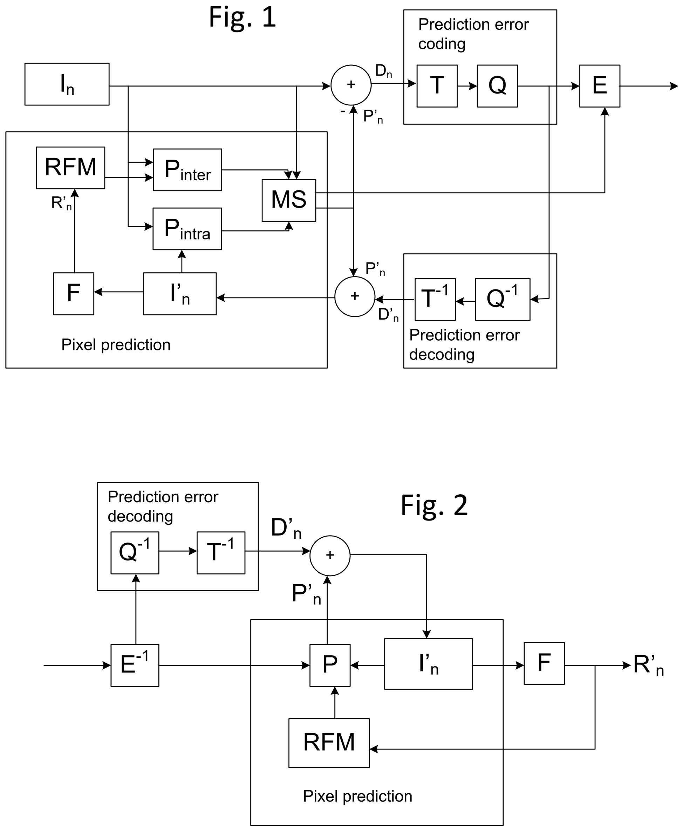

Figure 1 shows a simple example of a principle of an encoding process for 2D pictures, and Figure 2 shows a simple example of a principle of a decoding process for 2D pictures. In Figure 1, the following have been illustrated:

- an image to be encoded ($I_n$);
- a predicted representation of an image block ($P'_n$);
- a prediction error signal ($D_n$);
- a reconstructed prediction error signal ($D'_n$);
- a preliminary reconstructed image ($I'_n$);
- a final reconstructed image ($R'_n$);
- a transform (T) and inverse transform ($T^{-1}$);
- a quantization (Q) and inverse quantization ($Q^{-1}$);
- entropy encoding (E);
- a reference frame memory (RFM);
- inter prediction ($P_{inter}$);
- intra prediction ($P_{intra}$);
- mode selection (MS), and
- filtering (F).

In Figure 2 the following have been illustrated:

- a predicted representation of an image block ($P'_n$);
- a reconstructed prediction error signal ($D'_n$);
- a preliminary reconstructed image ($I'_n$);
- a final reconstructed image ($R'_n$); an inverse transform ($T^{-1}$);
- an inverse quantization ($Q^{-1}$);
- an entropy decoding ($E^{-1}$);
- a reference frame memory (RFM);
- a prediction (either inter or intra) (P);
- and filtering (F).

An elementary unit for the input to an encoder and the output of a decoder, respectively, in many cases is a picture (also referred to as "an image"). A picture given as an input to an encoder may also be referred to as a source picture, and a picture decoded by a decoded may be referred to as a decoded picture or a reconstructed picture.

The source and decoded pictures are each comprised of one or more sample arrays, such as one of the following sets of sample arrays:

- Luma (Y) only (monochrome).
- Luma and two chroma (YCbCr or YCgCo).
- Green, Blue and Red (GBR, also known as RGB).
- Arrays representing other unspecified monochrome or tri-stimulus color samplings (for example, YZX, also known as XYZ).

The sample arrays of a picture may be referred to as luma (or L or Y) and chroma, where the two chroma arrays may be referred to as Cb and Cr; regardless of the actual color representation method in use. The actual color representation method in use can be indicated, e.g., in a coded bitstream e.g., using the Video Usability Information (VUI) syntax of HEVC or alike. A component may be defined as an array or single sample from one of the three sample arrays (luma and two chroma) or the array or a single sample of the array that compose a picture in monochrome format.

Samples of a sample array have a certain bit depth, such as 8 bits per sample or 10 bits per sample. A bit depth implicitly specifies a value range, which may be referred to as the full range. For example, the full range is from 0 to 255, inclusive, for 8 bits per sample, or from 0 to 1023, inclusive, for 10 bits per sample. The source video may use allocate a narrower sample value range than the full range. A specific value range, sometimes referred to as the studio range, has been specified in the ITU-T H.273 standard specifying coding-independent code points for video. A source value range may interchangeably be referred to as a source sample value range, and may be defined as the sample value range of the video that is given as input to a video encoder to be encoded.

A picture may be defined to be either a frame or a field. A frame comprises a matrix of luma samples and possibly the corresponding chroma samples. A field is a set of alternate sample rows of a frame and may be used as encoder input, when the source signal is interlaced. Chroma sample arrays may be absent (and hence monochrome sampling may be in use) or chroma sample arrays may be subsampled when compared to luma sample arrays.

The Advanced Video Coding standard (which may be abbreviated AVC or H.264/AVC) was developed by the Joint Video Team (JVT) of the Video Coding Experts Group (VCEG) of the Telecommunications Standardization Sector of International Telecommunication Union (ITU-T) and the Moving Picture Experts Group (MPEG) of International Organization for Standardization (ISO) / International Electrotechnical Commission (IEC). There have been multiple versions of the H.264/AVC standard, each integrating several extensions or features to the specification. These extensions include Scalable Video Coding (SVC) and Multiview Video Coding (MVC).

The High Efficiency Video Coding standard (which may be abbreviated HEVC or H.265/HEVC) was developed by the Joint Collaborative Team - Video Coding (JCT-VC) of VCEG and MPEG. Extensions to H.265/HEVC include scalable, multiview, three-dimensional, and fidelity range extensions, which may be referred to as SHVC, MV-HEVC, 3D-HEVC, and REXT, respectively.

Versatile Video Coding (which may be abbreviated VVC, H.266, or H.266/VVC) is a video compression standard developed as the successor to HEVC. VVC is specified in ITU-T Recommendation H.266 and equivalently in ISO/IEC 23090-3, which is also referred to as MPEG-I Part 3.

ECM was developed by JVET (Joint Video Experts Team) of ITU-T VCEG and ISO/IEC MPEG, to provide a future video coding technology the compression capability of which would exceed that of the VVC.

A specification of the AV1 bitstream format and decoding process were developed by the Alliance for Open Media (AOM). The AV1 specification was published in 2018. AOM is reportedly working on the AV2 specification.

Some key definitions, bitstream and coding structures, and concepts of H.264/AVC, HEVC, VVC, and/or AV1 and some of their extensions are described in this section as an example of a video encoder, decoder, encoding method, decoding method, and a bitstream structure, wherein the embodiments may be implemented. The aspects of various embodiments are not limited to H.264/AVC, HEVC, VVC, and/or AV1 or their extensions, but rather the description is given for one possible basis on top of which the present embodiments may be partly or fully realized.

Hybrid video codecs, for example ITU-T H.263, H.264/AVC, HEVC, and VVC, may encode the video information in two phases. Firstly, pixel values in a certain picture area (or "block") are predicted for example by motion compensation means (finding and indicating an area in one of the previously coded pictures that corresponds closely to the block being coded) or by spatial means (using the pixel values around the block to be coded in a specified manner).

In motion compensation based prediction (which may be referred to as inter prediction, temporal prediction or motion-compensated temporal prediction or motion-compensated prediction or MCP) an area in one of the previously coded frames that corresponds closely to the block being coded is found and used for prediction. Inter prediction may reduce temporal redundancy.

In spatial prediction pixel values around the block to be coded are used. In the first phase, predictive coding may be applied, for example, as so-called sample prediction and/or so-called syntax prediction. In the sample prediction, pixel or sample values in a certain picture area or "block" are predicted. These pixel or sample values can be predicted, for example, using one or more of motion compensation or intra prediction mechanisms.

Intra prediction, where pixel or sample values can be predicted by spatial mechanisms, involve finding and indicating a spatial region relationship. Intra prediction utilizes the fact that adjacent pixels within the same picture are likely to be correlated. Intra prediction can be performed in spatial or transform domain, i.e., either sample values or transform coefficients can be predicted. Intra prediction is typically exploited in intra coding, where no inter prediction is applied.

In motion vector prediction, motion vectors e.g., for inter and/or inter-view prediction may be coded differentially with respect to a block-specific predicted motion vector. In many video codecs, the predicted motion vectors are created in a predefined way, for example by calculating the median of the encoded or decoded motion vectors of the adjacent blocks. Another way to create motion vector predictions, sometimes referred to as advanced motion vector prediction (AMVP), is to generate a list of candidate predictions from adjacent blocks and/or co-located blocks in temporal reference pictures and signalling the chosen candidate as the motion vector predictor. In addition to predicting the motion vector values, the reference index of previously coded/decoded picture can be predicted. The reference index is typically predicted from adjacent blocks and/or co-located blocks in temporal reference picture. Differential coding of motion vectors is typically disabled across slice boundaries.

The block partitioning, e.g., from a coding tree unit (CTU) to coding units (CUs) and down to prediction units (PUs), may be predicted.

In filter parameter prediction, the filtering parameters e.g., for sample adaptive offset may be predicted. Prediction approaches using image information from a previously coded image can also be called as inter prediction methods which may also be referred to as temporal prediction and motion compensation. Prediction approaches using image information within the same image can also be called as intra prediction methods.

In the second phase of encoding, the prediction error, i.e., the difference between the predicted block of pixels and the original block of pixels, is coded. This may be done by transforming the difference in pixel values using a specified transform (e.g., Discrete Cosine Transform (DCT) or a variant of it), quantizing the coefficients and entropy coding the quantized coefficients. By varying the fidelity of the quantization process, encoder can control the balance between the accuracy of the pixel representation (picture quality) and size of the resulting coded video representation (file size of transmission bitrate).

In some video codecs, such as H.265/HEVC, the video pictures are divided into coding units (CU) covering the area of the picture. In some video codecs, e.g., H.266/VVC, a picture is divided into coding tree units (CTUs), wherein a CTU may be split into smaller CUs using quaternary tree structure. A picture may also be divided into slices, tiles, bricks and sub-pictures.

A CU consists of one or more prediction units (PU) defining the prediction process for the samples within the CU and one or more transform units (TU) defining the prediction error coding process for the samples in the said CU. A CU may consist of a rectangular block of samples with a size selectable from a predefined set of possible CU sizes. A CU with the maximum allowed size may be named as LCU (largest coding unit) or CTU (coding tree unit) and the video picture is divided into non-overlapping CTUs. A CTU can be further split into a combination of smaller CUs, e.g., by recursively splitting the CTU and resultant CUs. Each resulting CU may have at least one PU and at least one TU associated with it. Each PU and TU can be further split into smaller PUs and TUs to increase granularity of the prediction and prediction error coding processes, respectively. Each PU has prediction information associated with it defining what kind of a prediction is to be applied for the pixels within that PU (e.g., motion vector information for inter predicted PUs and intra prediction directionality information for intra predicted PUs). Similarly, each TU is associated with information describing the prediction error decoding process for the samples within the TU (including e.g., DCT coefficient information). It may be signaled at CU level whether prediction error coding is applied or not for each CU. In the case there is no prediction error residual associated with the CU, it can be considered there are no TUs for the said CU. The division of the image into CUs, and division of CUs into PUs and TUs may be signaled in the bitstream allowing the decoder to reproduce the intended structure of these units.

The decoder reconstructs the output video by applying prediction means similar to the encoder to form a predicted representation of the pixel blocks (using the motion or spatial information created by the encoder and stored in the compressed representation) and prediction error decoding (inverse operation of the prediction error coding recovering the quantized prediction error signal in spatial pixel domain). After applying prediction and prediction error decoding means the decoder sums up the prediction and prediction error signals (pixel values) to form the output video frame. The decoder (and encoder) can also apply additional filtering means to improve the quality of the output video before passing it for display and/or storing it as prediction reference for the forthcoming frames in the video sequence.

Instead, or in addition to approaches utilizing sample value prediction and transform coding for indicating the coded sample values, a color palette based coding can be used. Palette based coding refers to a family of approaches for which a palette, i.e., a set of colors and associated indexes, is defined and the value for each sample within a coding unit is expressed by indicating its index in the palette. Palette based coding can achieve good coding efficiency in coding units with a relatively small number of colors (such as image areas which are representing computer screen content, like text or simple graphics). In order to improve the coding efficiency of palette coding different kinds of palette index prediction approaches can be utilized, or the palette indexes can be run-length coded to be able to represent larger homogenous image areas efficiently. Also, in the case the CU contains sample values that are not recurring within the CU, escape coding can be utilized. Escape coded samples are transmitted without referring to any of the palette indexes. Instead, their values are indicated individually for each escape coded sample.

In some video codecs, the motion information is indicated with motion vectors associated with each motion compensated image block. Each of these motion vectors represents the displacement of the image block in the picture to be coded (in the encoder side) or decoded (in the decoder side) and the prediction source block in one of the previously coded or decoded pictures. To represent motion vectors efficiently, those may be coded differentially with respect to block specific predicted motion vectors. In some video codecs, the predicted motion vectors are created in a predefined way, for example calculating the median of the encoded or decoded motion vectors of the adjacent blocks. Another way to create motion vector predictions is to generate a list of candidate predictions from adjacent blocks and/or co-located blocks in temporal reference pictures and signaling the chosen candidate as the motion vector predictor. In addition to predicting the motion vector values, the reference index of previously coded/decoded picture can be predicted. The reference index may be predicted from adjacent blocks and/or co-located blocks in temporal reference picture. Moreover, some high efficiency video codecs can employ an additional motion information coding/decoding mechanism, often called merging or merge mode, where all the motion field information, which includes motion vector and corresponding reference picture index for each available reference picture list, is predicted and used without any modification/correction. Similarly, predicting the motion field information is carried out using the motion field information of adjacent blocks and/or co-located blocks in temporal reference pictures and the used motion field information is signaled among a list of motion field candidate list filled with motion field information of available adjacent/co-located blocks.

Some video codecs may support motion compensated prediction from at least one source image (uni-prediction) and two sources (bi-prediction). In the case of uni-prediction a single motion vector is applied whereas in the case of bi-prediction two motion vectors are determined and the motion compensated predictions from two sources are combined to create the final sample prediction. In the case of weighted prediction, the relative weights of the two predictions can be adjusted, or a signaled offset can be added to the prediction signal.

In addition to applying motion compensation for inter picture prediction, similar approach can be applied to intra picture prediction. In this case the displacement vector indicates where from the same picture a block of samples can be copied to form a prediction of the block to be coded or decoded. This kind of intra block copying (IBC) methods can improve the coding efficiency substantially in presence of repeating structures within the frame - such as text or other graphics.

In some video codecs, the prediction residual after motion compensation or intra prediction is first transformed with a transform kernel (like DCT) and then coded. The reason for this is that often there still exists some correlation among the residual and transform can in many cases help reduce this correlation and provide more efficient coding.

Many video encoders utilize Lagrangian cost functions to find optimal coding modes, e.g., the desired Macroblock mode and associated motion vectors. This kind of cost function uses a weighting factor $\lambda$ to tie together the (exact or estimated) image distortion due to lossy coding methods and the (exact or estimated) amount of information that is required to represent the pixel values in an image area:

$$C = D + \lambda R \qquad\qquad (\text{Eq. 1})$$

where C is the Lagrangian cost to be minimized, D is the image distortion (e.g. Mean Squared Error) with the mode and motion vectors considered, and $R$ the number of bits needed to represent the required data to reconstruct the image block in the decoder (including the amount of data to represent the candidate motion vectors).

Loop filtering may be used in VVC to reduce artifacts and distortions that can occur during the compression process. Compression techniques such as block-based motion compensation and discrete cosine transform (DCT) can introduce artifacts such as blocking, ringing, and blurring in the decoded video. In-loop filtering is designed to reduce these artifacts and improve the perceived visual quality of the video.

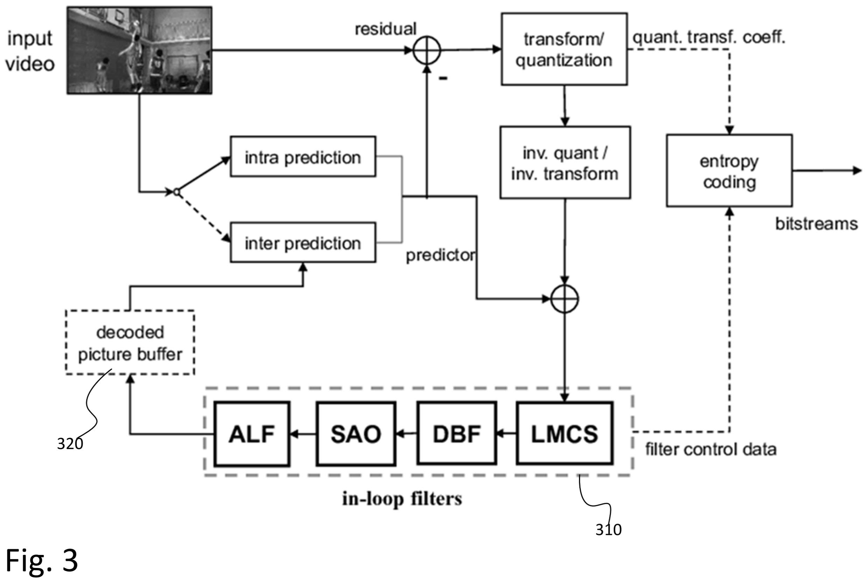

In-loop filters have a role in the maintenance of compressed video quality, since they can not only improve the quality of the current frame but can also provide a higher quality reference for subsequent frames. The in-loop filters in VVC are depicted in Figure 3. The in-loop filters 310 in Figure 3 comprise four processing steps, namely a luma mapping with chroma scaling (LMCS), followed by a deblocking filter (DBF), an SAO filter, and an adaptive loop filter (ALF), which are applied to the reconstructed samples before writing them into the decoded picture buffer 320. The DBF and SAO are similar to that of the HEVC standard, whereas LMCS and ALF are newly introduced in VVC.

A bitstream may be defined as a sequence of bits or a sequence of syntax structures. A bitstream format may constrain the order of syntax structures in the bitstream.

A syntax element may be defined as an element of data represented in a bitstream. A syntax structure may be defined as zero or more syntax elements present together in a bitstream in a specified order.

Syntax structures may be specified, for example, using arithmetic, logical, relational, bit-wise, and assignment operators similar to those available in many programming languages. For example, & may indicate a bit-wise 'AND' operation. Furthermore, syntax structures may be specified with reference to mathematical functions.

Syntax structures and semantics may use the values of variables derived from the values of syntax elements. Naming conventions may be defined for variables. For example, variables may be named by a mixture of lower case and upper-case letter and without any underscore characters. Variables starting with an upper-case letter may be derived for the decoding of the current syntax structure and all depending syntax structures. Variables starting with an upper-case letter may, in some cases, be used in the decoding process for later syntax structures without mentioning the originating syntax structure of the variable. Variables starting with a lower-case letter may only be used in relation to the syntax structure or function they have been defined for.

The phrase along the bitstream (e.g., indicating along the bitstream) may be defined to refer to out-of-band transmission, signaling, or storage in a manner that the out-of-band data is associated with the bitstream. The phrase decoding along the bitstream or alike may refer to decoding the referred out-of-band data (which may be obtained from out-of-band transmission, signaling, or storage) that is associated with the bitstream. For example, an indication along the bitstream may refer to metadata in a container file that encapsulates the bitstream.

Video coding specifications may define an elementary unit that for the output an of an encoder and/or for the input to a decoder. For example, such an elementary unit may be an open bitstream unit (OBU), as specified e.g. in AV1, or a Network Abstraction Layer (NAL) unit, as specified e.g. in HEVC or VVC.

In some video codecs, an elementary unit for the output of an encoder and the input of a decoder, respectively, is a Network Abstraction Layer (NAL) unit. For transport over packet-oriented networks or storage into structured files, NAL units may be encapsulated into packets or similar structures. A bytestream format has been specified in some video coding specifications for transmission or storage environments that do not provide framing structures. The bytestream format separates NAL units from each other by attaching a start code in front of each NAL unit. The start code may, for example, comprise a 24-bit byte-aligned value 0x0000001, which may be preceded by a byte that is equal to 0x00. To avoid false detection of NAL unit boundaries, encoders run a byte-oriented start code emulation prevention algorithm, which adds an emulation prevention byte to the NAL unit payload if a start code would have occurred otherwise. In order to enable straightforward gateway operation between packet- and stream-oriented systems, start code emulation prevention may always be performed regardless of whether the bytestream format is in use or not. A NAL unit may be defined as a syntax structure containing an indication of the type of data to follow and bytes containing that data in the form of an RBSP interspersed as necessary with emulation prevention bytes. A raw byte sequence payload (RBSP) may be defined as a syntax structure containing an integer number of bytes that is encapsulated in a NAL unit. An RBSP is either empty or has the form of a string of data bits containing syntax elements followed by an RBSP stop bit and followed by zero or more subsequent bits equal to 0.

In some video coding formats, a bitstream may comprise a sequence of units, such as NAL units or OBUs.

A bitstream may be defined to logically include a syntax structure, such as a NAL unit, when the syntax structure is transmitted along the bitstream but may be included in the bitstream according to the bitstream format. A bitstream may be defined to natively comprise a syntax structure, when the bitstream includes the syntax structure.

In some coding formats or standards, a bitstream may be in the form of a network abstraction layer (NAL) unit stream or a byte stream, that forms the representation of coded pictures and associated data forming one or more coded video sequences.

In some coding formats, such as AV1, a bitstream may comprise a sequence of open bitstream units (OBUs). An OBU comprises a header and a payload, wherein the header identifies a type of the OBU. Furthermore, the header may comprise a size of the payload in bytes.

Bitstreams or coded video sequences may be encoded to be temporally scalable as follows. Each picture may be assigned to a particular temporal sub-layer. A temporal sub-layer may be equivalently called a sub-layer, temporal sublayer, sublayer, or temporal level. Temporal sub-layers may be enumerated, e.g., from 0 (zero) upwards. The lowest temporal sub-layer, sub-layer 0, may be decoded independently. Pictures at temporal sub-layer 1 may be predicted from reconstructed pictures at temporal sub-layers 0 and 1. Pictures at temporal sub-layer 2 may be predicted from reconstructed pictures at temporal sub-layers 0, 1, and 2, and so on. In other words, a picture at temporal sub-layer N does not use any picture at temporal sub-layer greater than N as a reference for inter prediction. The bitstream created by excluding all pictures greater than or equal to a selected sub-layer value and including pictures remains conforming.

Each picture of a temporally scalable bitstream may be assigned with a temporal identifier (also known as TID, temporal layer identifier, sub-layer identifier, sublayer identifier, temporal sub-layer identifier, temporal sublayer identifier, or temporal layer ID), which may be, for example, assigned to a variable TemporalId. The temporal identifier may, for example, be indicated in a NAL unit header or in an OBU extension header. TemporalId equal to 0 corresponds to the lowest temporal level. The bitstream created by excluding all coded pictures having a TemporalId greater than or equal to a selected value and including all other coded pictures remains conforming. Consequently, a picture having TemporalId equal to tid_value does not use any picture having a TemporalId greater than tid_value as a prediction reference.

In some video coding standards, a sub-layer or a temporal sub-layer may be defined to be a temporal scalable layer (or a temporal layer, TL) of a temporal scalable bitstream, consisting of VCL NAL units with a particular value of the TemporalId variable and the associated non-VCL NAL units.

The NAL unit header enables use of NAL-unit-structured video bitstreams, such as AVC, HEVC, and VVC bitstreams, in a variety of transmission systems, including MPEG-2 transport stream and Real-time Transport Protocol (RTP).

NAL units may be categorized into Video Coding Layer (VCL) NAL units and non-VCL NAL units. In some coding formats, VCL NAL units may be coded slice NAL units.

A non-VCL NAL unit may be for example one of the following types: a sequence parameter set (SPS), a picture parameter set (PPS), a supplemental enhancement information (SEI) NAL unit, an access unit delimiter, an end of sequence NAL unit, an end of bitstream NAL unit, or a filler data NAL unit. Parameter sets may be needed for the reconstruction of decoded pictures, whereas many of the other non-VCL NAL units are not necessary for the reconstruction of decoded sample values.

A SEI NAL unit may contain one or more SEI messages, which are not required for the decoding of output pictures but may assist in related processes, such as picture output timing, rendering, error detection, error concealment, and resource reservation. Several SEI messages are specified in HEVC, and the user data SEI messages enable organizations and companies to specify SEI messages for their own use. HEVC contains the syntax and semantics for the specified SEI messages but no process for handling the messages in the recipient is defined. Consequently, encoders are required to follow the HEVC standard when they create SEI messages, and decoders conforming to the HEVC standard are not required to process SEI messages for output order conformance. One of the reasons to include the syntax and semantics of SEI messages in HEVC is to allow different system specifications to interpret the supplemental information identically and hence interoperate. It is intended that system specifications can require the use of particular SEI messages both in the encoding end and in the decoding end, and additionally the process for handling particular SEI messages in the recipient can be specified.

Some coding formats, such as HEVC and VVC, support temporal scalability functionality. When temporal scalability is used, higher temporal sublayers may be discarded without impacting decoding of lower temporal sublayers. The HEVC and VVC reference software encoders support a hierarchical prediction structure which can be used with temporal scalability.

Scalable video coding may refer to coding structure where one bitstream may include multiple representations of the content, for example, at different bitrates, resolutions or frame rates. In these cases, the receiver can extract the desired representation depending on its characteristics (e.g., resolution that matches best the display device). Alternatively, a server or a network element may extract the portions of the bitstream to be transmitted to the receiver depending on, e.g., the network characteristics or processing capabilities of the receiver. A meaningful decoded representation may be produced by decoding only certain parts of a scalable bitstream. A scalable bitstream may include a 'base layer' providing the lowest quality video available and one or more enhancement layers that enhance the video quality when received and decoded together with the lower layers. In order to improve coding efficiency for the enhancement layers, the coded representation of that layer typically depends on the lower layers. For example, the motion and mode information of the enhancement layer can be predicted from lower layers. Similarly, the pixel data of the lower layers can be used to create prediction for the enhancement layer.

It needs to be understood that the description of scalable video coding may be generalized to any scalability hierarchy with more than two layers. In this case, a second enhancement layer may depend on a first enhancement layer in encoding and/or decoding processes, and the first enhancement layer may therefore be regarded as the base layer for the encoding and/or decoding of the second enhancement layer. Furthermore, it needs to be understood that there may be inter-layer reference pictures from more than one layer in a reference picture buffer or reference picture lists of an enhancement layer, and each of these inter-layer reference pictures may be considered to reside in a base layer or a reference layer for the enhancement layer being encoded and/or decoded. Furthermore, it needs to be understood that other types of inter-layer processing than reference-layer picture upsampling may take place instead or additionally. For example, the bit-depth of the samples of the reference-layer picture may be converted to the bit depth of the enhancement layer and/or the sample values may undergo a mapping from the color space of the reference layer to the color space of the enhancement layer.

A scalable video coding and/or decoding scheme may use multi-loop coding and/or decoding process, which may have the following functionalities. In the encoding/decoding, a base layer picture may be reconstructed/decoded to be used as a motion-compensation reference picture for subsequent pictures, in coding/decoding order, within the same layer or as a reference for inter-layer (or inter-view or inter-component) prediction. The reconstructed/decoded base layer picture may be stored in the decoded picture buffer (DPB). An enhancement layer picture may likewise be reconstructed/decoded to be used as a motion-compensation reference picture for subsequent pictures, in coding/decoding order, within the same layer or as reference for inter-layer (or interview or inter-component) prediction for higher enhancement layers, when any. In addition to reconstructed/decoded sample values, syntax element values of the base/reference layer or variables derived from the syntax element values of the base/reference layer may be used in the inter-layer/inter-component/inter-view prediction.

A multi-layer bitstream is a bitstream comprising multiple layers, which may be, but are not limited to, base and enhancement layers as discussed above for scalable video coding. A multilayer bitstream may additionally or alternatively comprise independent layers that do not have inter-layer prediction relationship between each other and may even represent different types of content. Any multi-layer bitstream may be regarded as a scalable video bitstream.

Some coding formats, such as HEVC and VVC, support multi-layer functionality, e.g. for scalability, multiview and auxiliary pictures. Some coding formats, such as HEVC and VVC, include a video parameter set (VPS) that indicates for multi-layer bitstreams the maximum number of layers in the bitstream and any inter-layer coding dependencies among the layers. For example, with 2-layer spatial scalable coding an enhancement layer uses inter-layer coding with a dependency upon a base layer. Enhancement layer NAL units may be discarded without impacting decoding of base layer NAL units. Conversely, discarding of base layer NAL units negatively impacts decoding of an enhancement layer that uses inter-layer prediction from the base layer. Multi-layer bitstreams may also include independent layers, that do not use inter-layer prediction and may be decoded without any other layer.

Some video codecs, e.g., H.265/HEVC allows an external base layer for a layered HEVC bitstream. This feature can be used to code a base layer with a codec other than HEVC.

In video coding, term "split rendering" refers to a model, where a both client and a server are executing rendering tasks. The video rendered on the server is encoded and sent to the client. The client performs the final composition and displays the video. By the split rendering model, the server is given such parts of the rendering process, which are computationally more intensive, while the client takes care of less demanding tasks. One application for split rendering is in cloud gaming platforms.

Split rendering is considered to be available in 5G networks. The use cases and possible high level architecture are defined in Technical Report (TR) 26.928 which maps extended reality (XR) to fifth generation (5G) networks. In the release version 18, split rendering architectures in 5G have been defined. These relates to Split Rendering Media Service Enabler (SR_MSE) and IMS based conversational services (IBACS). In the technical specification of the SR_MSE (TS 26.565), a general-purpose split rendering media service enabler based on 5G system has been described. In the technical specification of the IBACS (TS 26.264), IMS based split rendering services and architectures specifically for conversational AR calls have been described. In the future, a new working item is planned, relating to Split Rendering over IMS (SR_IMS, TS 26.567) and the objective is to develop generic split rendering technologies over IMS not limited to conversational AR.

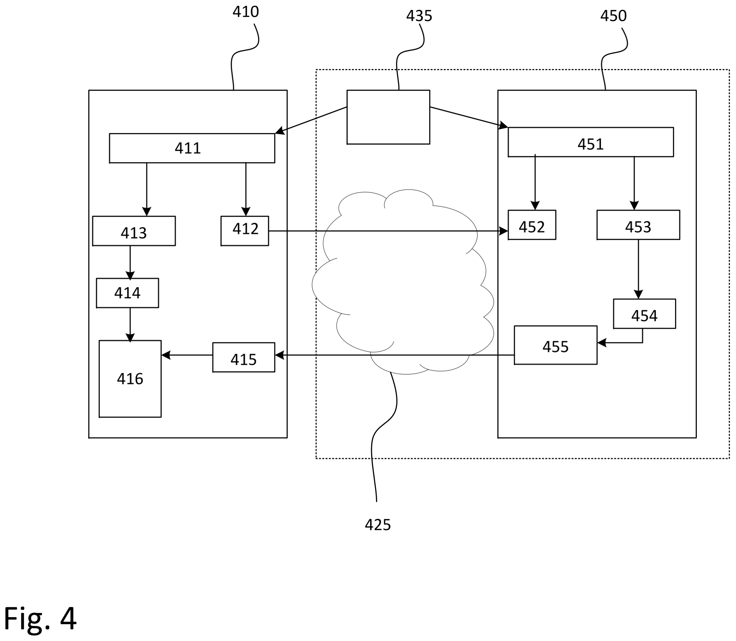

Split rendering (SR) architecture conceptually may comprise a split rendering server (SRS) (residing in a network) and a split rendering client (SRC) residing in the user equipment (UE), such as a smart phone, a laptop, a tablet, a headset or another device. Figure 4 illustrates an example of the split rendering model having a SRS 450 and a SRC 410 and a 3GPP network 425 therein between for data transmission. At the SRS 450, the following modules are shown:

- loading module 451 for loading assets and application logic received from application provider 435;
- input module 452 for generating input from data received from the SRC 419 (e.g., control instructions, adjustment in viewpoint, rendering requests for three-dimensional models) and data received from the loading module 451 (e.g., application logic);
- transformation module 453 for transforming input data and application data;
- rendering module 454 for rendering the transformed data into a rendered presentation; and
- encoding module 455 for encoding the rendered presentation.

At the SRC 410, the following modules are shown:

- loading module 411 for loading assets and application logic received from application provider 435;
- input module 412 for receiving commands from a user through the application logic from loading module 411, said commands to be delivered also to the SRS;
- transformation module 413 for transforming input data and application data;
- rendering module 414 for rendering the transformed data into a rendered presentation; and
- decoding module 415 for decoding the rendered presentation received from the SRS 451; and
- composing and displaying module 416 for composing the rendered presentations and displaying the composed video presentation.

In TS 26.565, the SRC is defined as an entity within the UE which handles the SR related operations and communications and presents frames for display, while SRS is defined as an application server capable of SR sessions. The SRC and SRS are specified to communicate using the 5G Real time communication architecture defined in TS 26.506. TS 26.264 and TS 26.567, on the other hand specify communication over IMS architecture defined in TS 23.228. As such, the SRC is defined as a DCMTSI client and the SRS is defined as a Media Function or a DC capable MRF or a DC Application Server, which have SR functionalities.

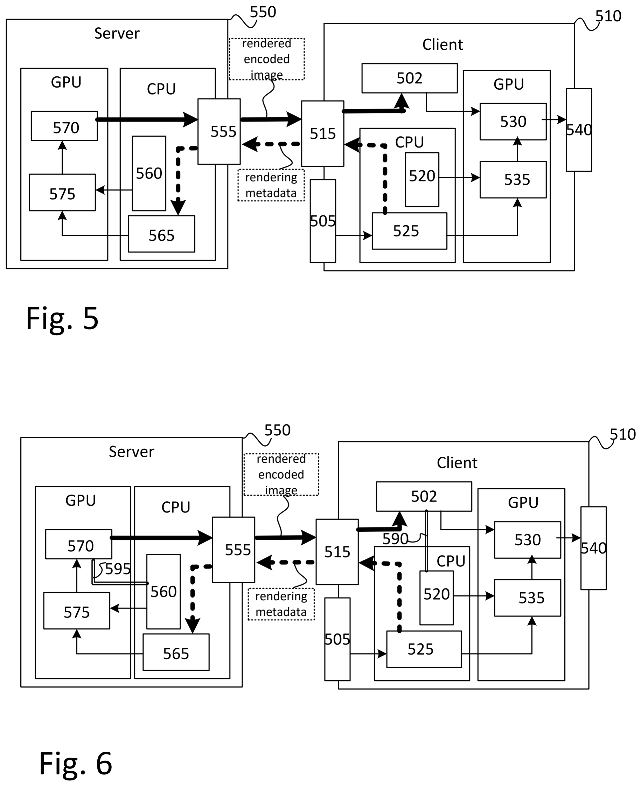

Figure 5 illustrates an example of an architecture for split rendering according to current state prior the present embodiments. Figure 5 shows a server 550 and a client 510, where both server 550 and the client 510 are communicating together to achieve split rendering. Both have their own rendering capabilities 575, 535, and both store the same game assets 560, 520, including textures images but also audio or video assets.

The split rendering loop relating to cloud gaming with respect of Figure 5 can be defined as follows:

1. A game logic 525 of the client 510 acquires control information from controllers 505 used by the player.
2. The control information and any relevant game metadata are sent to the server 550 through network interface 515.
3. The server 550 updates the game logic 565 based on received control information and game metadata received from the client 510.
4. At the server 550, one or several frames are rendered 575 based on updated game logic 565, and based on game assets 560.
5. The generated frames are encoded 570, and the generated bitstream is sent back to the client 510 through a network interface 555.
6. The client 510 receives the encoded video through a network interface 515, and forwards it to the video decoding unit 502

   a. If needed, and in parallel to item 6), some elements may be locally rendered 535, based on updated game logic 525 and based on game assets 520.

7. The client 510 compose 530 the decoded video 502 and the optional locally rendered 535 elements together, possibly including pose error correction, and forwarded for display 540 by the client device 510.

From a video encoding and generated traffic perspective, the encoding configurations that are used in a process of Figure 5 are focused on low-delay capability. It means that a IPPPPPPP... type of group of pictures (GoP) are generally used, wherein keyframes are regularly inserted to refresh the stream. This results in a bitrate peak aligned with the keyframes. Alternatively, a Gradual Decoding Refresh (GDR) type of method can be used to spread the bitrate, but such is more used in broadcast type of applications, for the contribution links.

It has been realized that the operation, as shown in Figure 5, has challenges that need to be addressed. For example, there is a redundancy in assets that are present in both the client and the server, which are used to render game objects, but are not exploited in the coding 570 and decoding 502. As another example, key-frame may create a bitrate peak that can be at some extent dealt with by Gradual Decoding Refresh (GDR).

The present embodiments aim to address the challenges as presented above, by exploiting the redundancy of game assets between the server and the clients to improve coding efficiency of the delivered video. This can additionally reduce bitrate peak generated by the key frame insertion. This is achieved by leveraging rendering capability of the client and the server to generate a same reference frame to be used for the encoding/decoding based on external data (e.g., local available files). Even though the challenges have been presented with respect of split rendering, the present embodiments can be used in other applications as well. Those may concern e.g., video conferencing, cloud gaming, broadcast and streaming.

According to an embodiment, the following operations may be performed at the encoder:

- Making a decision to load external data within the reference picture buffer of the video codec. The reference picture buffer can be e.g., the video Decoded Picture Buffer (DPB) for the MPEG codecs.
- Processing the external data thus generating one or more pictures, and loading the one or more pictures into the reference picture buffer of the video codec. The reference picture buffer can be e.g., the video Decoded Picture Buffer (DPB) for the MPEG codecs. The processing of the external data can be down-scaling, up-scaling, pixel reordering, color format conversion, texture packing, skewing, rotating, other image-space transformations, color tone transformation, etc.
- Generating loading instructions and encoding the loading instructions as side information to a video bitstream, to be sent to the decoder. The loading instructions may be carried in-band in bitstream syntax (e.g. with in-band or out-of-band signaling). The loading instructions can include picture order count (PoC) or layer identifier information, format conversion instruction, up/down-scaling filters, data transformations, frame offsets, image offsets, validity flags, rotations, color conversion, etc. It is to be noted that the generation of loading instructions can be done in advance, targeting an upcoming PoC as trigger for loading this external data, including loading criterions.
- Appointing the external data in the reference picture buffer to be one or more reference pictures that are available for use as reference for prediction. The external data can be a locally rendered frame, or other video/image assets (e.g. texture) composited together or not composited.
- Generating a predictor from the reference picture, the predictor to be used to generate coding units for encoded video data.
- Sending the loading instructions in or along a bitstream comprising encoded video data to the decoder.
- Optionally also sending the external data to decoder, if not already present in the decoder.

According to an embodiment, the following operations may be performed at the decoder:

- Receiving loading instructions and a bitstream comprising at least encoded video data. Optionally, the bitstream may also comprise external data.
- Invoking the loading instructions and determining external data, and processing the external data based on the loading instructions in order to generate one or several pictures. The generated one or several pictures are loaded into the reference picture buffer of the video codec to be used as one or more reference pictures available for prediction. The reference picture buffer can be e.g., the video Decoded Picture Buffer (DPB). The processing can include down-scaling, up-scaling, sample reordering, color format conversion, texture packing, skewing, rotating, other image-space transformations, color tone transformation, etc. The loading instructions may be indicated by a rendering engine or external data, such as a SEI message. The external data can be a locally rendered frame, or other game assets (e.g. texture) composited together or not composited.

- Decoding a coding unit of a picture, using a predictor from a reference picture.
- Decoding the pictures of a video, reconstructing them and providing the video to the composer prior to display.

Additionally, the keyframe may be lightened by leveraging externally generated local frame to encode the keyframe more efficiently.

Architecture according to an embodiment

Figure 6 illustrates an embodiment of the architecture of Figure 5 with addition where an encoder 570 has an interface 595 to load external data (e.g., pictures) into its reference picture buffer in game assets 560. Similarly, a decoder 502 has an interface 590 to load external data (e.g., pictures) to its internal reference picture buffer in game assets 520.
In one embodiment the reference picture buffer is the Decoded Picture Buffer (DPB).
In one embodiment, the external data is present on both the decoder side and the encoder side, as shown in Figure 6. Alternatively, the external data can be sent from the encoder to the decoder, or from the decoder to the encoder by external means.

Loading instructions

The external data that is loaded can be of various type. This means that the external data does not necessarily have to be aligned with the internal format and representation used in the video codec.
In one embodiment, the external data can be frames that are based on video game textures files, coded in RGB over 24b (8b for each channel), and converted into encoded video format, e.g., YUV 420p 10b. In such embodiment, the conversion instruction can be signaled in the loading instructions. At the decoder, the conversion instruction can be decoded from the loading instructions.
In another embodiment, the external data can be frames that are based on video game textures files, represented in a specific coordinate system, and converted to the coordinate system used in encoding, e.g. starting top left. In such embodiment, the coordinate shift instructions can be signaled in the loading instructions. At the decoder, the coordinate shift instructions can be decoded from the loading instructions.
In another embodiment, the external data can be frames that are based on video game texture files, packed together in the reference frame. In such embodiment, the packing instructions can be signaled in the loading instructions. At the decoder, the packing instructions can be decoded from the loading instructions.
In another embodiment, the external data can be frames that are based on video game texture files of different resolutions than the encoded resolution. In such embodiment, the scaling filters can be signaled in the loading instructions. At the decoder, the scaling filters can be decoded from the loading instructions.
In another embodiment, the external data can be a frame that is based on a rendering of local game texture files. In such embodiment the rendering operations can be signaled in the loading instructions. At the decoder, the rendering operations can be decoded from the loading instructions.
In another embodiment, the external data can be a frame that is loaded with Picture Order Count (POC) and/or Reference Picture List (RPL) instructions. In such embodiment, the POC and/or RPL can be signaled in the loading instructions. At the decoder, the POC and/or RPL can be decoded from the loading instructions.
In another embodiment, the external data can be a frame that is generated as a lower layer used as reference for higher layer encoding.
In another embodiment, an identifier for the external file to be loaded can be signaled in the loading instructions. At the decoder, an identifier for the external file to be loaded can be decoded from the loading instructions.
In another embodiment, a hash of the external file to be loaded can be signaled in the loading instructions. At the decoder, a hash of the external file to be loaded can be decoded from the loading instructions.
In one embodiment the loading instructions are signaled in or alongside the bitstream. At the decoder, the loading instructions can be decoded from the bitstream.

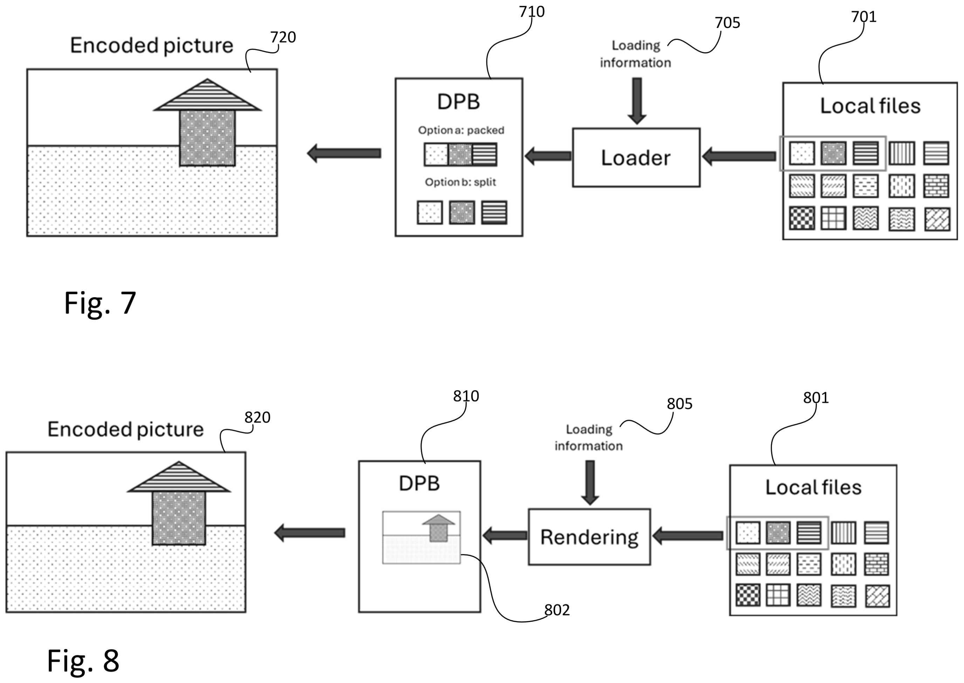

Figure 7 illustrates an example of loading of local texture files into the reference picture buffer. In figure 7, a selection of local texture files 701 are loaded with loading information 705 (also referred to as "loading instructions") to the reference picture buffer, such as DPB 710. The loading information 705 indicates how the loaded files should be processed to generate the picture 720.
Figure 8 illustrates another example where locally rendered picture 802 is loaded with loading information 805 (also referred to as "loading instructions") into the reference picture buffer, such as DPB 810. The encoded picture 820 is generated based on the rendered picture 802 and the loading information 805. It is noted that locally rendered picture 802 has a lower quality than the encoded picture 820.

Signaling of loading instructions

In one embodiment, the loading instructions are carried by introducing a new parameter set in the high-level syntax of the bitstream. Thus, the decoder is configured to decode the loading instructions from such new parameter set.

In another embodiment, the loading instructions are carried by introducing a new SEI message in the VSEI specification. Thus, the decoder is configured to decode the loading instructions from such new SEI message.

In one embodiment, the loading instructions are carried out-of-band. This can be implemented in a dedicated metadata track coming alongside the video stream. Thus, the decoder is configured to decode the loading instructions from such a dedicated metadata track. In one embodiment, this can be done by using ITU-T 35 mechanisms.

Predictor

In one embodiment, a coding unit uses a specific prediction mode, wherein the predictor is generated based on the external data, such as a loaded picture.

In one embodiment, a coding unit uses a specific prediction mode, referring to one of the multiple patched textures in the external data, such as a loaded picture.

In one embodiment, the prediction for a mode referring to the loaded picture is derived automatically, based on the loading instructions.

In one embodiment, a coding unit, when predicted from the loading picture, resizes the texture, based on the loading instructions.

In one embodiment, the loaded picture is placed as a lower layer for currently coded picture. An inter-layer predictor is built to encode the coding units in the currently coded picture.

In one embodiment, a coding unit, when predicted from the loading picture, transforms the texture with matrix transform, based on the loading information.

Picture type

In one embodiment, a picture can be tagged as being dependent to a loaded external picture.

Personalization/Splicing

In one embodiment, an external data, such as a picture, or a part of it, is signaled as being customizable. Thus, the decoder is configured to decode that the external data is customizable. "Customizable" in this respect means that the external data can be replaced by another texture if needed. Such external data can be e.g., an ad.

Further embodiments

In one embodiment, after having negotiated with the client, the server may establish a set of common assets that can be shared by both the encoder and decoder.

In one embodiment, the server is aware on client's file system paths to external data, and is thus able to encode the selected external data paths in the loading instructions. In this respect, the decoder is able to decode the selected external data paths from the loading instructions.

In one embodiment, the encoder selects a subset in the set of common assets, said subset to be loaded based on current game engine consumption. As an example, the subset can be N most used textures, wherein N=1, 2, 3, ....

In one embodiment, the rendering engine of the server communicates the statistics on textures' usage to the video encoder enabling the video encoder to select the subset.

In one embodiment, the encoder adapts the resolution of the loaded data to their respective usage by the game engine. For example, the most used textures are to be loaded with a high resolution while other ones are to be loaded with resolution different from the high resolution, e.g., lower resolution.

In one embodiment, the rendering engine of the server may communicate one or more of the following to the encoder: the frame to be encoded, a lower resolution rendered image with associated rendering instructions, the rendering instructions being encoded in the loading instructions

In one embodiment, the rendering engine of the server may communicate the following to the encoder: a map of textures used in the rendered images, said map enabling the encoder to perform a better coding decision.

In one embodiment, the encoder may prepare multiple alternatives for long reference frames loaded from external data in advance, which may be used to anticipate keyframes. In a cloud gaming context, the long reference frames can be for example, menus or loading screens.

In one embodiment, the encoder may adapt its keyframe insertion to be aligned with loading of external data, and to create a triggering signal and signal the triggering signal in the bitstream. In this respect, the decoder is configured to decode the triggering signal from the bitstream.

In one embodiment, the encoder may mark some of the textures eligible for customization, which means that the decoder can replace a texture by a customized one. Such a need may occur for example in an ad replacement.

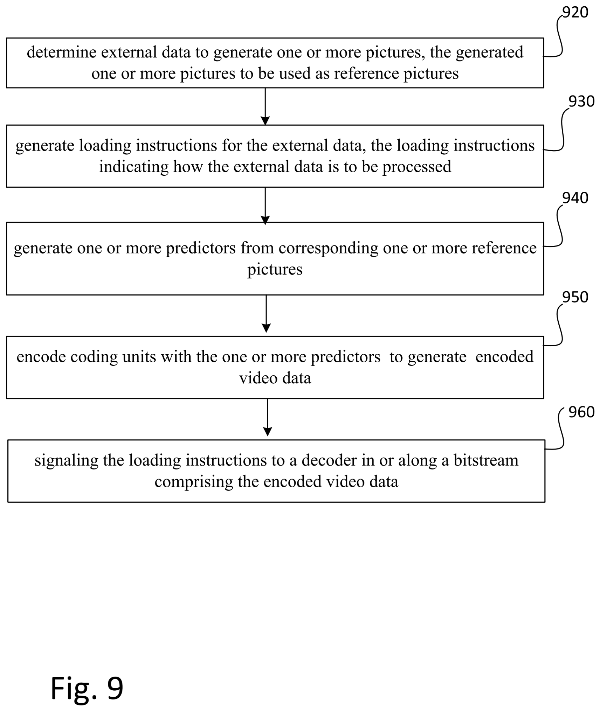

Figure 9 is a flowchart illustrating a method for encoding according to an embodiment. The method shown in Figure 9 comprises determining 920 external data to generate one or more pictures, the generated one or more pictures to be used as reference pictures; generating 930 loading instructions for the external data, the loading instructions indicating how the external data is to be processed; generating 940 one or more predictors from corresponding one or more reference pictures; encoding 950 coding units with the one or more predictors to generate encoded video data; and signaling 960 the loading instructions to a decoder in or along a bitstream comprising the encoded video data. The steps of the method as shown in Figure 9 can be implemented with a respective computer module of a computer system.

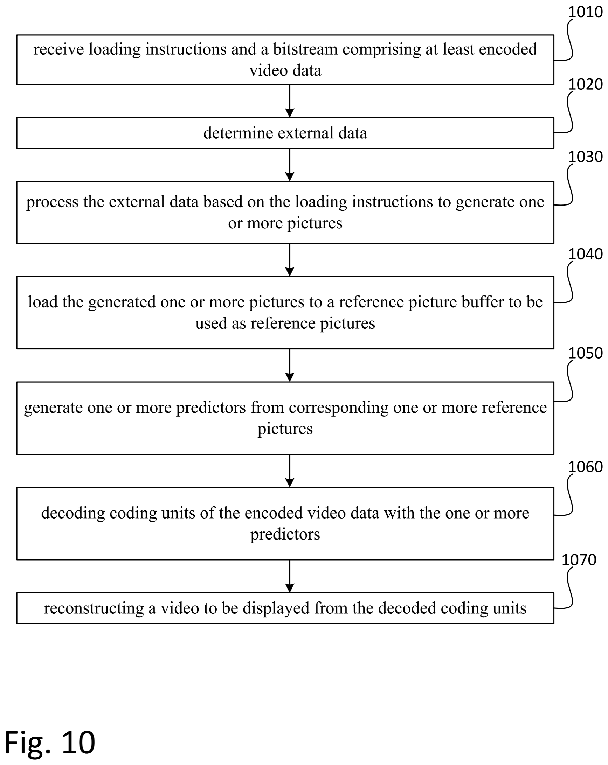

Figure 10 is a flowchart illustrating a method for encoding according to an embodiment. The method shown in Figure 10 comprises receiving 1010 loading instructions and a bitstream comprising at least encoded video data; determining 1020 external data; processing 1030 the external data based on the loading instructions to generate one or more pictures; loading 1040 the generated one or more pictures to a reference picture buffer to be used as reference pictures; generating 1050 one or more predictors from corresponding one or more reference pictures; decoding 1060 coding units of the encoded video data with the one or more predictors; and reconstructing 1070 a video to be displayed from the decoded coding units. The steps of the method as shown in Figure 10 can be implemented with a respective computer module of a computer system.

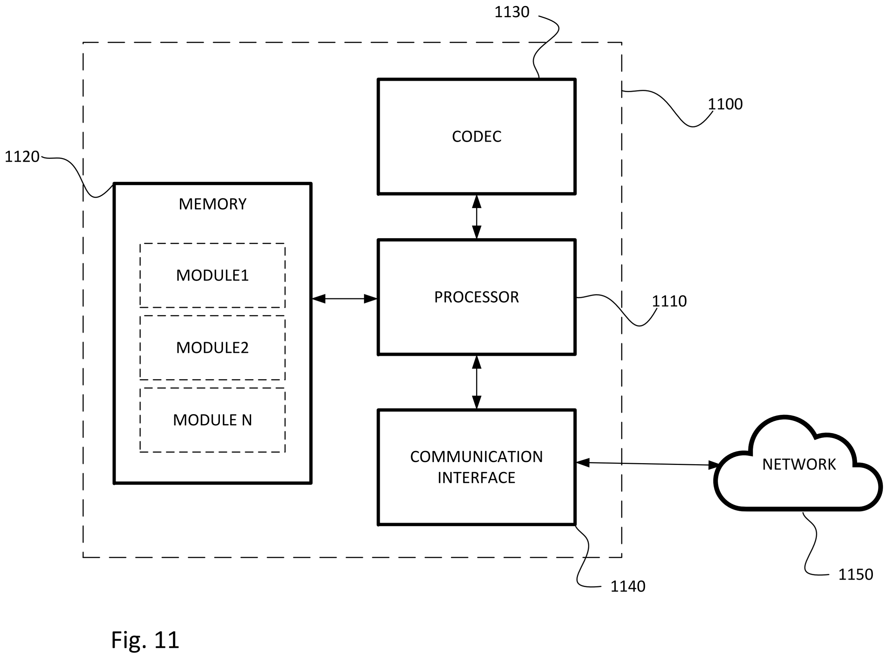

Embodiments of the present invention may be implemented in software, hardware, application logic or a combination of software, hardware and application logic. In an example embodiment, the application logic, software or an instruction set is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer, with one example of a computer described and depicted in Figure 11. A computer-readable medium may comprise a computer-readable storage medium that may be any media or means that can contain or store the instructions for use by or in connection with an instruction execution system, apparatus, or device, such as a computer.

Figure 11 illustrates an example of an electronic apparatus 500, being an example of video coding system where the present embodiments can be implemented. In some embodiments, the apparatus may be a mobile terminal or a user equipment of a wireless communication system or a camera device. The apparatus 500 may also be comprised at a local or a remote server or a graphic processing unit of a computer. The apparatus may also be comprised as part of a head-mounted display device.

The apparatus 1100 comprises one or more processors 1110 and one or more memories 1120 and one or more transceivers interconnected through one or more buses. The one or more memories 1120 store computer instructions, for example in respective modules (Module1, Module2, ModuleN). The one or more memories may store data in the form of image, video and/or audio data, and/or may also store instructions to be executed by the processors or the processor circuitry. The one or more processors may comprise a central processing unit (CPU) and/or a graphical processing unit (GPU). The one or more buses may be address, data or control buses, and may include interconnection mechanism, such as a series of lines on a motherboard or integrated circuit, fiber optics or other optical communication equipment. The apparatus also comprises a codec 1130 that is configured to implement various embodiments relating to present solution. According to some embodiments, the apparatus may comprise an encoder or a decoder. The apparatus 1100 also comprises a communication interface 1140 which is suitable for generating wireless communication signals for example for communication with a cellular communications network, a wireless communications system, or a wireless local area network, and thus enabling data transfer over data transfer network 1150.

The apparatus 1100 may comprise a display in the form of a liquid crystal display. In other embodiments of the invention the display may be any suitable display technology suitable to display an image or video. The apparatus 1100 may further comprise a keypad. In other embodiments of the invention any suitable data or user interface mechanism may be employed. For example, the user interface may be implemented as a virtual keyboard or data entry system as part of a touch-sensitive display. The apparatus 1100 may comprise a microphone or any suitable audio input which may be a digital or analogue signal input. The apparatus 1100 may further comprise an audio output device which in embodiments of the invention may be any one of: an earpiece, speaker, or an analogue audio or digital audio output connection. The apparatus 1100 may also comprise a battery (or in other embodiments of the invention the device may be powered by any suitable mobile energy device such as solar cell, fuel cell or clockwork generator). The apparatus may further comprise a camera capable of recording or capturing images and/or video. The camera may be a multi-lens camera system having at least two camera sensors. The camera is capable of recording or detecting individual frames which are then passed to the codec 1130 or to processor 1110. The apparatus may receive the video and/or image data for processing from another device prior to transmission and/or storage.

The apparatus 1100 may further comprise e.g., the other functional units disclosed in any of the Figures 1 - 6 for implementing any of the present embodiments.

The apparatus may operate in a system, comprising multiple communication devices, which can communicate through one or more networks. The system may comprise any combination of wired or wireless networks including, but not limited to a wireless cellular telephone network (such as a GSM, UMTS, CDMA network etc.), a wireless local area network (WLAN) such as defined by any of the IEEE 802.x standards, a Bluetooth personal area network, an Ethernet local area network, a token ring local area network, a wide area network, and the Internet.

For example, the system can be a mobile telephone network enabling a connection to the internet. The connection can form, but is not limited to, long range wireless connections, short range wireless connections, and various wired connections including, but not limited to, telephone lines, cable lines, power lines, and similar communication pathways.

The example communication devices operating in the system may include, but are not limited to, an electronic device or apparatus, a combination of a personal digital assistant (PDA) and a mobile telephone, a PDA, an integrated messaging device (IMD), a desktop computer, a notebook computer, each of which can be a representative of the apparatus according to present embodiments. The apparatus according to present embodiments may be stationary or mobile when carried by an individual who is moving. The apparatus may also be located in a mode of transport including, but not limited to, a car, a truck, a taxi, a bus, a train, a boat, an airplane, a bicycle, a motorcycle, or any similar suitable mode of transport.

The apparatus may also be a set-top box; i.e. a digital TV receiver, which may/may not have a display or wireless capabilities, a tablet or (laptop) a personal computer (PC), which have hardware or software or combination of the encoder/decoder implementations, in various operating systems, or a chipset, processor, DSP and/or embedded system offering hardware/software based coding.

The apparatus according to present embodiments may send and receive calls and messages and communicate with service providers through a wireless connection to a base station. The base station may be connected to a network server that allows communication between the mobile telephone network and the internet.

The apparatus may communicate using various transmission technologies including, but not limited to, code division multiple access (CDMA), global systems for mobile communications (GSM), universal mobile telecommunications system (UMTS), time divisional multiple access (TDMA), frequency division multiple access (FDMA), transmission control protocol-internet protocol (TCP-IP), short messaging service (SMS), multimedia messaging service (MMS), email, instant messaging service (IMS), Bluetooth, IEEE 802.11 and any similar wireless communication technology. A communications device involved in implementing various embodiments of the present invention may communicate using various media including, but not limited to, radio, infrared, laser, cable connections, and any suitable connection.

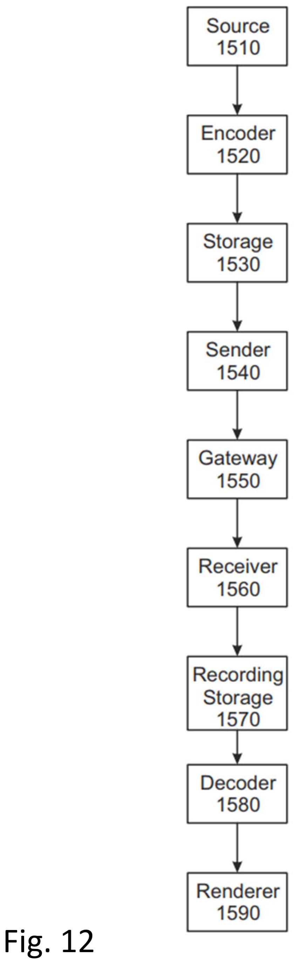

Figure 12 is a graphical representation of an example multimedia communication system within which various embodiments may be implemented. A data source 1510 provides a source signal in an analog, uncompressed digital, or compressed digital format, or any combination of these formats. An encoder 1520 may include or be connected with a pre-processing, such as data format conversion and/or filtering of the source signal. The encoder 1520 encodes the source signal into a coded media bitstream. It should be noted that a bitstream to be decoded may be received directly or indirectly from a remote device located within virtually any type of network. Additionally, the bitstream may be received from local hardware or software. The encoder 1520 may be capable of encoding more than one media type, such as audio and video, or more than one encoder 1520 may be required to code different media types of the source signal. The encoder 1520 may also get synthetically produced input, such as graphics and text, or it may be capable of producing coded bitstreams of synthetic media. In the following, only processing of one coded media bitstream of one media type is considered to simplify the description. It should be noted, however, that typically real-time broadcast services comprise several streams (typically at least one audio, video and text sub-titling stream). It should also be noted that the system may include many encoders, but in the figure only one encoder 1520 is represented to simplify the description without a lack of generality. It should be further understood that, although text and examples contained herein may specifically describe an encoding process, one skilled in the art would understand that the same concepts and principles also apply to the corresponding decoding process and vice versa.

The coded media bitstream may be transferred to a storage 1530. The storage 1530 may comprise any type of mass memory to store the coded media bitstream. The format of the coded media bitstream in the storage 1530 may be an elementary self-contained bitstream format, or one or more coded media bitstreams may be encapsulated into a container file, or the coded media bitstream may be encapsulated into a Segment format suitable for DASH (or a similar streaming system) and stored as a sequence of Segments. If one or more media bitstreams are encapsulated in a container file, a file generator (not shown in the figure) may be used to store the one more media bitstreams in the file and create file format metadata, which may also be stored in the file. The encoder 1520 or the storage 1530 may comprise the file generator, or the file generator is operationally attached to either the encoder 1520 or the storage 1530. Some systems operate "live", i.e. omit storage and transfer coded media bitstream from the encoder 1520 directly to the sender 1540. The coded media bitstream may then be transferred to the sender 1540, also referred to as the server, on a need basis. The format used in the transmission may be an elementary self-contained bitstream format, a packet stream format, a Segment format suitable

**EP 4 773 596 A1**

for DASH (or a similar streaming system), or one or more coded media bitstreams may be encapsulated into a container file. The encoder 1520, the storage 1530, and the server 1540 may reside in the same physical device or they may be included in separate devices. The encoder 1520 and server 1540 may operate with live real-time content, in which case the coded media bitstream is typically not stored permanently, but rather buffered for small periods of time in the content encoder 1520 and/or in the server 1540 to smooth out variations in processing delay, transfer delay, and coded media bitrate.

The server 1540 sends the coded media bitstream using a communication protocol stack. The stack may include but is not limited to one or more of Real-Time Transport Protocol (RTP), User Datagram Protocol (UDP), Hypertext Transfer Protocol (HTTP), Transmission Control Protocol (TCP), and Internet Protocol (IP). When the communication protocol stack is packet-oriented, the server 1540 encapsulates the coded media bitstream into packets. For example, when RTP is used, the server 1540 encapsulates the coded media bitstream into RTP packets according to an RTP payload format. Typically, each media type has a dedicated RTP payload format. It should be again noted that a system may contain more than one server 1540, but for the sake of simplicity, the following description only considers one server 1540.

If the media content is encapsulated in a container file for the storage 1530 or for inputting the data to the sender 1540, the sender 1540 may comprise or be operationally attached to a "sending file parser" (not shown in the figure). In particular, if the container file is not transmitted as such but at least one of the contained coded media bitstream is encapsulated for transport over a communication protocol, a sending file parser locates appropriate parts of the coded media bitstream to be conveyed over the communication protocol. The sending file parser may also help in creating the correct format for the communication protocol, such as packet headers and payloads. The multimedia container file may contain encapsulation instructions, such as hint tracks in the ISOBMFF, for encapsulation of the at least one of the contained media bitstream on the communication protocol.

The server 1540 may or may not be connected to a gateway 1550 through a communication network, which may e.g. be a combination of a CDN, the Internet and/or one or more access networks. The gateway may also or alternatively be referred to as a middle-box. For DASH, the gateway may be an edge server (of a CDN) or a web proxy. It is noted that the system may generally comprise any number gateways or alike, but for the sake of simplicity, the following description only considers one gateway 1550. The gateway 1550 may perform different types of functions, such as translation of a packet stream according to one communication protocol stack to another communication protocol stack, merging and forking of data streams, and manipulation of data stream according to the downlink and/or receiver capabilities, such as controlling the bit rate of the forwarded stream according to prevailing downlink network conditions. The gateway 1550 may be a server entity in various embodiments.

The system includes one or more receivers 1560, typically capable of receiving, de-modulating, and de-capsulating the transmitted signal into a coded media bitstream. The coded media bitstream may be transferred to a recording storage 1570. The recording storage 1570 may comprise any type of mass memory to store the coded media bitstream. The recording storage 1570 may alternatively or additively comprise computation memory, such as random-access memory. The format of the coded media bitstream in the recording storage 2170 may be an elementary self-contained bitstream format, or one or more coded media bitstreams may be encapsulated into a container file. If there are multiple coded media bitstreams, such as an audio stream and a video stream, associated with each other, a container file is typically used and the receiver 1560 comprises or is attached to a container file generator producing a container file from input streams. Some systems operate "live," i.e. omit the recording storage 1570 and transfer coded media bitstream from the receiver 1560 directly to the decoder 1580. In some systems, only the most recent part of the recorded stream, e.g., the most recent 10-minute excerption of the recorded stream, is maintained in the recording storage 1570, while any earlier recorded data is discarded from the recording storage 1570.

The coded media bitstream may be transferred from the recording storage 1570 to the decoder 1580. If there are many coded media bitstreams, such as an audio stream and a video stream, associated with each other and encapsulated into a container file or a single media bitstream is encapsulated in a container file e.g. for easier access, a file parser (not shown in the figure) is used to decapsulate each coded media bitstream from the container file. The recording storage 1570 or a decoder 1580 may comprise the file parser, or the file parser is attached to either recording storage 1570 or the decoder 1580. It should also be noted that the system may include many decoders, but here only one decoder 1580 is discussed to simplify the description without a lack of generality.

The coded media bitstream may be processed further by a decoder 1580, whose output is one or more uncompressed media streams. Finally, a renderer 1590 may reproduce the uncompressed media streams with a loudspeaker or a display, for example. The receiver 1560, recording storage 1570, decoder 1580, and renderer 1590 may reside in the same physical device or they may be included in separate devices.

A sender 1540 and/or a gateway 1550 may be configured to perform switching between different representations e.g. for switching between different viewports of 360-degree video content, view switching, bitrate adaptation and/or fast start-up, and/or a sender 1540 and/or a gateway 1550 may be configured to select the transmitted representation(s). Switching between different representations may take place for multiple reasons, such as to respond to requests of the receiver 1560 or prevailing conditions, such as throughput, of the network over which the bitstream is conveyed. In other words, the receiver 1560 may initiate switching between representations. A request from the receiver can be, e.g., a request for a Segment or a Subsegment from a different representation than earlier, a request for a change of transmitted scalability layers and/or sub-layers, or a change of a rendering device having different capabilities compared to the previous one. A request for a Segment may be an HTTP GET request. A request for a Subsegment may be an HTTP GET request with a byte range. Additionally, or alternatively, bitrate adjustment or bitrate adaptation may be used for example for providing so-called fast start-up in streaming services, where the bitrate of the transmitted stream is lower than the channel bitrate after starting or random-accessing the streaming in order to start playback immediately and to achieve a buffer occupancy level that tolerates occasional packet delays and/or retransmissions. Bitrate adaptation may include multiple representation or layer up-switching and representation or layer down-switching operations taking place in various orders.

In telecommunications and data networks, a channel may refer either to a physical channel or to a logical channel. A physical channel may refer to a physical transmission medium such as a wire, whereas a logical channel may refer to a logical connection over a multiplexed medium, capable of conveying several logical channels. A channel may be used for conveying an information signal, for example a bitstream, from one or several senders (or transmitters) to one or several receivers.

A decoder 1580 may be configured to perform switching between different representations e.g. for switching between different viewports of 360-degree video content, view switching, bitrate adaptation and/or fast start-up, and/or a decoder 1580 may be configured to select the transmitted representation(s). Switching between different representations may take place for multiple reasons, such as to achieve faster decoding operation or to adapt the transmitted bitstream, e.g. in terms of bitrate, to prevailing conditions, such as throughput, of the network over which the bitstream is conveyed. Faster decoding operation might be needed for example if the device including the decoder 1580 is multi-tasking and uses computing resources for other purposes than decoding the video bitstream. In another example, faster decoding operation might be needed when content is played back at a faster pace than the normal playback speed, e.g. twice or three times faster than conventional real-time playback rate.

In the above, some embodiments have been described with reference to and/or using terminology of HEVC and/or VVC. It needs to be understood that embodiments may be similarly realized with any video encoder and/or video decoder.

If desired, the different functions discussed herein may be performed in a different order and/or concurrently with each other. Furthermore, if desired, one or more of the above-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the above describes example embodiments of the invention, these descriptions should not be viewed in a limiting sense. Rather, there are several variations and modifications which may be made without departing from the scope of the present invention as defined in the appended claims.

**Claims**

1.    An apparatus comprising: means for determining external data to generate one or more pictures, the generated one or more pictures to be used as reference pictures; means for generating loading instructions for the external data, the loading instructions indicating how the external data is to be processed; means for generating one or more predictors from corresponding one or more reference pictures; means for encoding coding units with the one or more predictors to generate encoded video data; and means for signaling the loading instructions to a decoder in or along a bitstream comprising the encoded video data.

2.    The apparatus according to claim 1, further comprising: means for sending the external data to the decoder.

3.    The apparatus according to any of claims 1 to 2, wherein the loading instructions comprises a unique identifier of the external file to be loaded, including: file name, hash value, checksum.

4.    The apparatus according to any of claims 1 to 2, wherein the loading instructions comprises one or more of the following: picture order count, reference picture list, layer identifier information, format conversion instruction, upscaling filter, downscaling filter, data transformation, one or more frame offsets, one or more image offsets, one or more validity flags, rotation, color conversion.

5.    The apparatus according to any of preceding claims, wherein the external data comprises frames that are based on texture files and are coded in one color coding format and converted to encoded video color coding format, wherein the loading instructions comprises conversion instructions.

6. The apparatus according to any of claims 1 to 4, wherein the external data comprises frames that are based on texture files and are represented in a specific coordinate system and converted to the coordinate system used in encoding, wherein the loading instructions comprise coordinate shift instructions.

7. The apparatus according to any of claims 1 to 4, wherein the external data comprises frames that are based on texture files and are packed together in a reference frame, wherein the loading instructions comprise packing instructions.

8. The apparatus according to any of claims 1 to 4, wherein the external data comprises frames that are based on texture files and have different resolution than an encoded resolution, whereupon the loading instructions comprise scaling filters.

9. The apparatus according to any of claims 1 to 4, wherein the external data comprises frames that are based on rendering of a local texture files, wherein the loading instructions comprise rendering operations.

10. The apparatus according to any of preceding claims, further comprising: means for signaling the loading instructions with in-band or out-of-band signaling.

11. The apparatus according to any of preceding claims, further comprising: means for generating one or more predictors based on a patched texture in a picture generated from the external data.

12. The apparatus according to any of preceding claims, further comprising: means for generating an inter-layer predictor from a reference picture in a lower layer to encode coding units in a current picture.

13. A method comprising: means for determining external data to generate one or more pictures, the generated one or more pictures to be used as reference pictures; means for generating loading instructions for the external data, the loading instructions indicating how the external data is to be processed; means for generating one or more predictors from corresponding one or more reference pictures; means for encoding coding units with the one or more predictors to generate encoded video data; and means for signaling the loading instructions to a decoder in or along a bitstream comprising the encoded video data.

14. The method according to claim 13, wherein the loading instructions comprises one or more of the following: a picture order count, a reference picture list, layer identifier information, a format conversion instruction, an upscaling filter, a downscaling filter, a data transformation, one or more frame offsets, one or more image offsets, one or more validity flags, a rotation, a color conversion.

15. The method according to any of claims 13 to 14, wherein the external data comprises frames that are based on texture files and are coded in one color coding format and converted to encoded video color coding format, wherein the loading instructions comprises conversion instructions.

Fig. 1

Fig. 2

Fig. 3

Fig. 4

EP 4 773 596 A1

Fig. 5

Fig. 6

**Fig. 7**

**Fig. 8**

920

determine external data to generate one or more pictures, the generated one or more pictures to be used as reference pictures

930

generate loading instructions for the external data, the loading instructions indicating how the external data is to be processed

940

generate one or more predictors from corresponding one or more reference pictures

950

encode coding units with the one or more predictors to generate encoded video data

960

signaling the loading instructions to a decoder in or along a bitstream comprising the encoded video data

Fig. 9

1010

receive loading instructions and a bitstream comprising at least encoded video data

1020

determine external data

1030

process the external data based on the loading instructions to generate one or more pictures

1040

load the generated one or more pictures to a reference picture buffer to be used as reference pictures

1050

generate one or more predictors from corresponding one or more reference pictures

1060

decoding coding units of the encoded video data with the one or more predictors

1070

reconstructing a video to be displayed from the decoded coding units

Fig. 10

Fig. 11

Fig. 12

Europäisches
Patentamt
European
Patent Office
Office européen
des brevets

# EUROPEAN SEARCH REPORT

**Application Number**

EP 25 22 7365

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/058401 A1 (INTERDIGITAL VC HOLDINGS FRANCE SAS [FR]) 1 April 2021 (2021-04-01) * page 16, line 14 - page 19, line 30; figures 9-10 * ----- | 1-15 | INV. H04N19/105 H04N19/46 H04N19/597 H04N19/70 |
| X | US 2013/322531 A1 (CHEN YING [US] ET AL) 5 December 2013 (2013-12-05) * paragraph [0091] - paragraph [0101] * * paragraph [0156] - paragraph [0161]; figures 6-7 * ----- | 1-15 | |
| A | EMMANUEL THOMAS ET AL: "[MeCAR] MeCAR Permanent Document v9.0", 3GPP DRAFT; S4-231453; TYPE DISCUSSION 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Goteborg, SE; 20230821 - 20230825, 25 August 2023 (2023-08-25), XP052451475, [retrieved on 2023-08-25] * paragraph [9.1.4.4] - paragraph [9.1.5] * * paragraph [9.3.1] - paragraph [9.3.5]; figures 43-49 * ----- | 1-15 | **TECHNICAL FIELDS SEARCHED (IPC)** H04N |

The present search report has been drawn up for all claims

| Place of search | Date of completion of the search | Examiner |
|---|---|---|
| Munich | 31 March 2026 | Moschetti, Fulvio |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

    .................................................................................
& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 25 22 7365

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2026

| Patent document cited in search report | Publication date | Patent family member(s) | | Publication date |
|---|---|---|---|---|
| WO 2021058401 A1 | 01-04-2021 | CN | 114424535 A | 29-04-2022 |
| | | EP | 4035358 A1 | 03-08-2022 |
| | | US | 2022360771 A1 | 10-11-2022 |
| | | WO | 2021058401 A1 | 01-04-2021 |
| US 2013322531 A1 | 05-12-2013 | CN | 104365105 A | 18-02-2015 |
| | | US | 2013322531 A1 | 05-12-2013 |
| | | WO | 2013181595 A2 | 05-12-2013 |

EPO FORM P0459

For more details about this annex : see Official Journal of the European Patent Office, No. 12/82